Europäisches Patentamt

European Patent Office

Office européen des brevets

(19)

(11) Numéro de publication: **0 031 734**
A2

(12) **DEMANDE DE BREVET EUROPEEN**

(21) Numéro de dépôt: **80401239.1**

(22) Date de dépôt: **29.08.80**

(51) Int. Cl.³: **H 02 J 13/00,** H 02 J 3/14, H 01 H 71/74

(30) Priorité: **31.08.79 FR 7921897**
**02.10.79 FR 7924490**

(71) Demandeur: **Alberti, Rosette, 7 Rue Marie Bonaparte, F-92210 Saint Cloud (FR)**
Demandeur: **Faugeras, Philippe, 11 Rue de Silly, F-92100 Boulogne (FR)**
Demandeur: **Lemonnier, André, Villa San Luis Place du Marché Prefailles, F-44770 La Plaine sur Mer (FR)**

(43) Date de publication de la demande: **08.07.81**
**Bulletin 81/27**

(72) Inventeur: **Alberti, Rosette, 7 Rue Marie Bonaparte, F-92210 Saint Cloud (FR)**
Inventeur: **Faugeras, Philippe, 11 Rue de Silly, F-92100 Boulogne (FR)**
Inventeur: **Lemonnier, André, Villa San Luis Place du Marché Prefailles, F-44770 La Plaine sur Mer (FR)**

(84) Etats contractants désignés: **AT BE CH DE GB IT LI LU NL SE**

(74) Mandataire: **Lemonnier, André, 4 Boulevard Saint Denis, F-75010 Paris (FR)**

(54) **Procédé et appareillage d'exploitation d'un réseau de distribution électrique avec téléréglage des disjoncteurs de puissance.**

(57) La présente invention concerne un réseau de distribution électrique avec téléréglage des disjoncteurs de puissance.

Dans le procédé d'exploitation d'un réseau de distribution électrique dans lequel au moins certains postes de consommation sont munis d'un disjoncteur dont le seuil de déclenchement est réglable par un dispositif télécommandé (12–13) à, au moins, deux valeurs, objet de l'invention, l'on modifie, par le dispositif télécommandé 12–13, la fraction de l'intensité totale consommée par le poste de consommation qui agit sur l'organe moteur 5, du disjoncteur.

Ce procédé permet de satisfaire les pointes de consommation électrique en évitant une coupure généralisée du courant.

1

<u>Réseau de distribution électrique avec téléréglage des disjoncteurs de puissance.</u>

La présente invention concerne le téléréglage de la valeur de la puissance électrique mise à la disposition de chaque usager.

Il est connu que la consommation électrique globale varie dans de grandes limites selon les périodes de l'année, selon l'heure de la journée et selon la température extérieure et qu'il se produit des pointes de consommation qui ne peuvent être satisfaites ou qui ne peuvent être satisfaites que moyennant la production de kilowatts d'un prix de revient élevé.

Il a déjà été proposé dans la demande de brevet allemande publiée N° 2.404.234 demandée le 30 Janvier 1974 de modifier par téléréglage la puissance dont dispose l'usager en fonction des heures de pointe. Ce téléréglage de la puissance est toutefois obtenue en mettant en circuit ou hors-circuit un disjoncteur de puissance réglé pour la valeur minimale de la puissance allouée de sorte que pour pouvoir contrôler la puissance qui ne peut dépasser le consommateur aussi bien en heures normales qu'en heures de pointe il faut prévoir deux disjoncteurs ce qui est encombrant et onéreux. Les disjoncteurs de puissance sont généralement constitués par un déclencheur thermique, notamment une lame bi-métallique qui est chauffée soit par effet Joule du courant qui la traverse, soit par une résistance de chauffage parcourue par un courant,
le courant influant sur le déclencheur thermique étant souvent égal, d'une manière connue, à une fraction du courant
consommé.

La demande de brevet allemande ci-dessus rappelée propose,
pour réduire la valeur du courant pour laquelle le déclencheur thermique va fonctionner de réaliser un préchauffage
du déclencheur thermique par une résistance de chauffage
qui est mise en circuit pendant les périodes où l'on veut
réduire la puissance utilisable.

En raison du mode de fonctionnement des déclencheurs thermiques et notamment de la courbe de déformation des lames bimétalliques,il est pratiquement impossible de régler un tel
disjoncteur pour qu'il fonctionne pour deux valeurs précises
selon que la résistance de chauffage additionnelle est en
circuit ou non. En effet on peut seulement agir mécaniquement
sur la position du point de déformation qui provoque le
déclenchement et ,pour obtenir un réglage pour deux valeurs ,
il faudrait régler aussi l'apport calorifique assuré par la
résistance de chauffage additionnelle ce qui est impossible.
D'autres problèmes se posent en outre du fait qu'une telle
résistance additionnelle consomme en permanence un courant
de valeur fixe et par le fait que pour obtenir une bonne précision de fonctionnement la valeur du courant agissant sur le
déclencheur thermique doit être relativement importante.

La présente invention a pour but de remédier à ces inconvénients et de fournir un procédé de téléréglage de la puissance à la disposition des usagers et un disjoncteur de
puissance à seuil de déclenchement téléréglable qui soient
simples, les deux valeurs de fonctionnement du disjoncteur
pouvant être réglées d'une manière simple et avec précision.

La présente invention a en conséquence pour objet un procédé
d'exploitation d'un réseau de distribution électrique dans lequel au moins certains postes de consommation sont munis d'un disjoncteur dont le seuil de déclenchement est réglable par un dispositif télécommandé à, au moins, deux valeurs caractérisé en ce que l'on modifie, par le dispositif télécommandé, la fraction de l'intensité totale consommée par le poste de consommation qui agit sur l'organe moteur du disjoncteur.

Elle a également pour objet un disjoncteur de puissance à seuil de déclenchement téléréglable du type comportant un organe moteur parcouru par un courant égal à une fraction de l'intensité totale consommée, cette fraction étant déterminée par une résistance de dérivation en parallèle avec l'organe moteur et un dispositif télécommandé modifiant son seuil de fonctionnement, caractérisé en ce que le dispositif télécommandé modifie la valeur de la résistance en parallèle.

Selon un mode de réalisation la résistance en parallèle est constituée par au moins deux résistances en série avec au moins un contact télécommandé assurant le shuntage de l'une des résistances.

Selon un autre mode de réalisation la résistance en parallèle est constituée par au moins deux résistances en parallèle avec un contact télécommandé en série avec au moins l'une des résistances.

D'autres caractéristiques de l'invention apparaîtront à la lecture de la description de divers modes de réalisation de l'invention faite ci-après avec référence aux dessins ci-annexés dans lesquels :

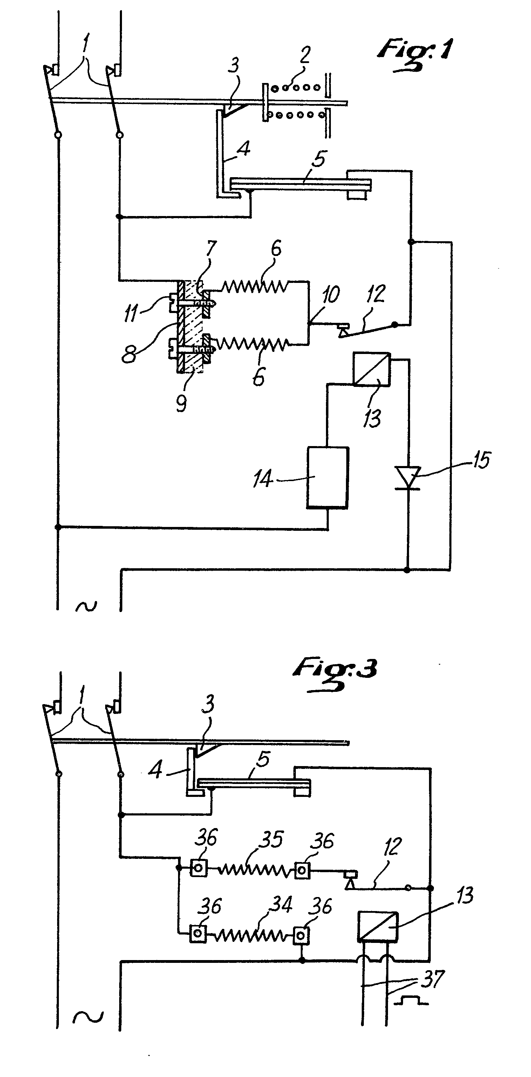

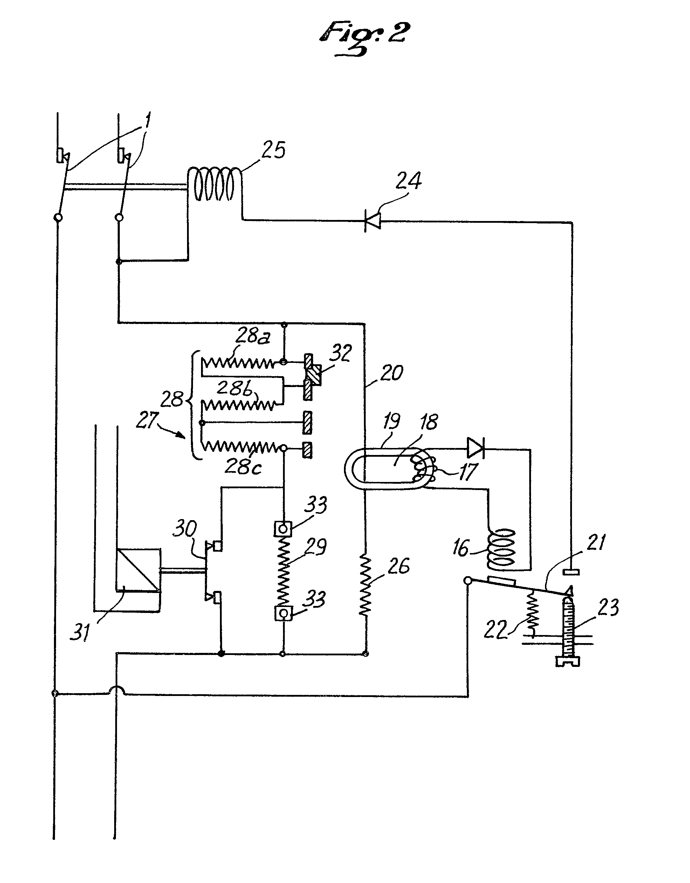

La figure 1 est un schéma électrique d'un disjoncteur de puissance monophasé à déclencheur thermique conforme à l'invention; la figure 2 est un schéma électrique d'un disjoncteur de puissance monophasé à déclencheur électromagnétique conforme à l'invention et la figure 3 est un schéma électrique d'un disjoncteur de puissance monophasé à déclencheur thermique selon une troisième forme de réalisation.

Dans tous les modes de réalisation les mêmes éléments ou les éléments équivalents sont désignés par les mêmes références.

La partie connue du disjoncteur de puissance dont on a omis la partie différentielle à commande par courant de fuite, comporte un contacteur dont les armatures 1 coupent les deux phases d'alimentation, le contacteur étant commandé par un déclencheur constitué par un ressort 2 avec une butée 3 coopérant avec un loquet 4 commandé par un bilame 5 parcouru par tout ou partie du courant d'une phase. Lorsque l'intensité du courant passant par le bilame 5 excède un seuil fixé de construction mais réglable par réglage du point de déclenchement du loquet 4, la déformation du bilame est telle que le loquet 4 échappe à la butée 3 et le contacteur 1 s'ouvre.

Le réglage de la fraction du courant total qui passe par le bilame est assuré, de façon classique, par un pont de réglage comportant une ou plusieurs résistances 6 connectées à des plaquettes 7 situées en face d'une plaquette 8 mais en en étant isolées par une plaquette isolante 9. Le point commun 10 des résistances 6 est relié soit à la borne d'entrée, soit à la borne de sortie du bilame 5 et la plaquette 8 est respectivement connectée à la borne de sortie ou à la borne d'entrée du bilame. La mise en circuit de chaque résistance 6 s'effectue de manière classique par une vis 11 se vissant dans une des plaquettes 7 et dont la tête porte sur la plaquette 8.

Dans un disjoncteur conçu pour la mise en oeuvre de l'invention et comme illustré à la figure 1, un contacteur 12 est inséré entre le point commun 10 des résistances 6 et le conducteur d'alimentation correspondant et ce contacteur est commandé par une bobine 13 qui est alimentée par un circuit sélecteur d'impulsion 14 associé à un redresseur 15 lesquels sélectionnent et transforment en courant continu une impulsion caractéristique envoyée sur le réseau. L'alimentation peut se faire également, comme dans la figure 3, par un circuit de télécommande 16 branché sur un contacteur sélecteur commun à plusieurs disjoncteurs. Lorsque le contact 12 est ouvert tout le courant passe par le bilame alors que, lorsqu'il est fermé, seule une fraction du courant total, déterminée par les vis 11 mises en place, traverse le bilame.

Dans le mode de réalisation de la figure 2 l'organe moteur du disjoncteur est constitué par un relais 16 alimenté par le secondaire 17 d'un transformateur 18 constitué par un tore en matériau magnétique 19 sur lequel est bobiné le secondaire 17, le tore étant traversé par un conducteur 20 parcouru par une fraction du courant appelé par l'usager comme expliqué ci-après. La valeur du courant circulant dans le conducteur 20 qui détermine la fermeture du contact de l'armature 21 est réglée par la force de rappel du ressort 22 et par la position de repos fixée par la butée à vis 23. Le courant passant par l'armature 21, redressé par le redresseur 24 alimente l'enroulement 25 du contacteur général 1. La fraction du courant appelé qui circule dans le conducteur 20 constituant le primaire du transformateur est fonction du rapport entre les valeurs de la propre résistance 26 du circuit du primaire et de la résistance en série 27 qui forme dérivation comme expliqué ci-après.

Conformément à l'invention, la résistance 27 est formée par deux résistances en série 28 et 29, la résistance 29 pouvant être court-circuitée par l'armature 30 d'un relais 31 qui est télécommandé. Naturellement l'armature 30 et le relais 31 pourraient être remplacés par un contacteur électronique tel qu'un transistor. Si la valeur de la résistance 26 est R , si la valeur de la résistance 28 est $R_1$ et la valeur de la résistance 29 est $R_2$ et si le courant total consommé est I le courant $I_1$ alimentant le transformateur 18 est égal :

1°/ lorsque le contact 30 est fermé à

$$I_1 = I \times \frac{R_1}{R + R_1}$$

2°/ lorsque le contact 30 est ouvert à

$$I_1 = I \times \frac{(R_1 + R_2)}{R + R_1 + R_2}$$

Le disjoncteur fonctionnant pour la même valeur de $I_1$, le courant de déclenchement dans le cas du contact 30 fermé

$Idf = I_1 \times \dfrac{R + R_1}{R_1}$ et dans le cas du contact 30 ouvert

$Ido = I_1 \times \dfrac{R + R_1 + R_2}{R_1 + R_2}$ .

Lorsque le contact 30 est fermé la fraction du courant total passant par le primaire du transformateur 18 est plus faible que lorsque le contact 30 est ouvert. Donc lorsque le contact 30 est fermé le disjoncteur ne fonctionne que pour une puissance consommée plus élevée. Lorsque le distributeur veut réduire la puissance appelable il alimente les relais 31. Par contre lorsque les relais ne sont pas alimentés,le disjoncteur déclenche pour une puissance nominale plus élevée.

Dans le mode de réalisation représenté la résistance 28 est constituée par des résistances élémentaires 28a, 28b et 28c en série,une ou plusieurs résistances pouvant être shuntée par un élément conducteur amovible tel que 32,ce qui permet de régler la valeur de la résistance 28 donc la puissance pour laquelle le disjoncteur déclenche en période normale. La résistance 29 est une résistance calibrée fixée entre deux plots 33, cette résistance pouvant être remplacée par une résistance de valeur différente pour régler la puissance pour laquelle le disjoncteur déclenche en heures de pointe. Bien évidemment la valeur de la résistance 29 pourrait être réglable par un dispositif à résistances en série shuntables comme la résistance 28 ou la résistance 28 pourrait être constituée par une résistance réglable interchangeable comme la résistance 29.

Dans le mode de réalisation de la figure 3, deux résistances 34 et 35 sont montées en parallèle avec le bilame 5 ces résistances étant des résistances calibrées montées de manière interchangeable pour le réglage des seuils de fonctionnement entre des plots 36. La résistance 35 est montée en série avec le contacteur 12 dont l'ouverture est commandée par la bobine 13 alimentée par une ligne de téléréglage 37. Lorsque le contact 12 est ouvert une plus grande fraction de courant consommé traverse le bilame 5 et le disjoncteur déclenche pour un seuil plus faible que lorsque le contact 12 est fermé.

Revendications

1. Un procédé d'exploitation d'un réseau de distribution électrique dans lequel au moins certains postes de consommation sont munis d'un disjoncteur dont le seuil de déclenchement est réglable par un dispositif télécommandé (12-13 , 30-31) à, au moins, deux valeurs, caractérisé en ce que l'on modifie, par le dispositif télécommandé 12-13 , 30-31, la fraction de l'intensité totale consommée par le poste de consommation qui agit sur l'organe moteur 5 , 16-18 du disjoncteur.

2. Un disjoncteur de puissance à seuil de déclenchement téléréglable du type comportant un organe moteur (5 , 16-18) parcouru par un courant égal à une fraction de l'intensité totale consommée, cette fraction étant déterminée par une résistance de dérivation (6 , 28-29 , 34-35) en parallèle avec l'organe moteur et un dispositif télécommandé (12-13 , 30-31) modifiant son seuil de fonctionnement, caractérisé en ce que le dispositif télécommandé modifie la valeur de la résistance (6 , 28-29 , 34-35) en parallèle.

3. Un disjoncteur de puissance selon la revendication 2, caractérisé en ce que la résistance en parallèle est constituée par au moins deux résistances (28-29) en série avec au moins un contact télécommandé (30) assurant le shuntage de l'une des résistances (29).

4. Un disjoncteur de puissance selon la revendication 2, caractérisé en ce que la résistance en parallèle est constituée par au moins deux résistances (34-35) en parallèle avec un contact télécommandé 12 en série avec au moins l'une des résistances (35).

5. Un disjoncteur de puissance selon la revendication 2 comportant un circuit de déclenchement avec un détecteur 5 d'intensité du courant et un circuit de dérivation constitué par une résistance ou plusieurs résistances 6 en parallèle avec un dispositif de connexion 7 - 8 - 9 - 11 permettant d'insérer dans le circuit de dérivation une ou plusieurs desdites résistances 6, caractérisé en ce qu'un interrupteur télécommandable 12-13 est monté en série avec la ou les résistances 6 en parallèle et le dispositif de connexion 7 - 8 - 9 - 11 dans le circuit de dérivation.

6. Un disjoncteur selon l'une quelconque des revendications 2 à 4, caractérisé en ce que la valeur d'au moins une des résistances (28 - 29 - 34 - 35) est réglable du fait que cette résistance est constituée par une résistance calibrée interchangeable.

7. Un disjoncteur selon l'une quelconque des revendications 2 à 4, caractérisé en ce que la valeur d'au moins une des résistances (28 - 29 - 34 - 35) est réglable du fait que cette résistance est constituée par une pluralité de résistances en série (28a , b et c), chacune étant shuntable par un élément conducteur amovible (32).

0031734

Fig.1

Fig.3

Fig. 2